# EUROPEAN PATENT APPLICATION

(11) **EP 3 957 165 A1**
(43) Date of publication of application: **23.02.2022**
(21) Application number: 19929340.8
(22) Date of filing: 16.08.2019
(51) Int. Cl.: A01G 31/00

(54) **AUXILIARY ROOT PLACEMENT APPARATUS FOR HYDROPONIC SEPARATE PLANTING**

(30) Priority: 23.05.2019 CN 201910432944
(71) Applicant: Fujian Sanan Sino-Science Photobiotech Co., Ltd., Quanzhou, Fujian 362411 (CN)
(72) Inventor: RAO, Zhenwen, Quanzhou, Fujian 362411 (CN); HAUNG, Yangyin, Quanzhou, Fujian 362411 (CN); LIU, Ganlin, Quanzhou, Fujian 362411 (CN)
(74) Representative: Sach, Greg Robert
(86) International application number: PCT/CN2019/100931
(87) International publication number: WO 2020/232846

(57) **Abstract**

The present invention relates to the technical field of hydroponic culture, in particular to an auxiliary root placement device for hydroponic transplanting. The auxiliary root placement device includes an underframe, a repeated horizontal moving mechanism, a jacking mechanism and a vacuum adsorption mechanism, wherein the repeated horizontal moving mechanism is disposed on the underframe, the jacking mechanism is slidingly connected with the underframe, an output end of the repeated horizontal moving mechanism is fixedly connected with the jacking mechanism, an output end of the jacking mechanism is fixedly connected with the vacuum adsorption mechanism. In the present invention, the jacking mechanism is pushed by the repeated horizontal moving mechanism to drive the vacuum adsorption mechanism to move directly below the cultivation hole on the cultivation plate, and then the vacuum adsorption mechanism is driven to rise upwards by the jacking mechanism, so that the output end of the vacuum adsorption mechanism touches the root hairs of the hydroponic plant through the cultivation hole to adsorb the root hairs tightly to the vacuum suction rod, and then retracts through the jacking mechanism, so that the root hairs smoothly pass through the cultivation hole without being stuck on the cultivation plate, resulting in rotting of the root hairs, and thus ensuring the stable growth of the hydroponic plants.

## Description

### FIELD OF THE INVENTION

The present invention relates to the technical field of hydroponic culture, in particular to an auxiliary root placement device for hydroponic transplanting.

### BACKGROUND OF THE INVENTION

Hydroponic culture is a new soilless culture method of plants, also known as nutrient solution culture. Its core is to infiltrate root systems of plants directly in nutrient solution, which can replace soil and provide growth factors such as water, nutrients and oxygen to plants, so that plants can grow normally.

The prior art has the following problems: in the process of transplanting, the root hairs of hydroponic plants will grow more luxuriantly, and in the process of putting into the cultivation plate, some root hairs will be stuck outside the cultivation hole and stay on the cultivation plate, which will easily cause the root hairs to rot and affect the growth of hydroponic plants.

### BRIEF SUMMARY OF THE INVENTION

Therefore, it is necessary to provide an auxiliary root placement device for hydroponic transplanting. Through the reasonable layout and cooperative operation of various structures, the root systems of hydroponic plants can smoothly enter the cultivation hole and will not stuck on the cultivation plate, thus ensuring the stable growth of hydroponic plants.

To achieve the above objective, the present invention provides an auxiliary root placement device for hydroponic transplanting, which includes an underframe, a repeated horizontal moving mechanism, a jacking mechanism and a vacuum adsorption mechanism, wherein the repeated horizontal moving mechanism is disposed on the underframe, the jacking mechanism is slidingly connected with the underframe, an output end of the repeated horizontal moving mechanism is fixedly connected with the jacking mechanism, an output end of the jacking mechanism is fixedly connected with the vacuum adsorption mechanism, and an output end of the vacuum adsorption mechanism is disposed upward. The root systems of hydroponic plants can smoothly enter the cultivation hole and will not stuck on the cultivation plate, thus ensuring the stable growth of hydroponic plants.

Further, the vacuum adsorption mechanism includes a plurality of vacuum suction rods, a vacuum suction device and a mounting seat, wherein the vacuum suction rods are disposed on the vacuum suction device, the vacuum suction device is disposed on the mounting seat, and the mounting seat is fixedly connected with the output end of the jacking mechanism. It is possible to adsorb the root hairs of a plurality of hydroponic plants at the same time.

Further, the vacuum suction rod is cylindrical, the vacuum suction rod is provided with a plurality of rows of adsorption pores, the vacuum suction rod is provided with a direction adjustment lock nut, and the direction adjustment lock nut is disposed on the vacuum suction device. It is possible to better adsorb the root hairs of hydroponic plants without hurting them, and can adjust the direction according to the demand.

Further, the jacking mechanism includes a connecting plate and a jacking cylinder disposed on the connecting plate, wherein the connecting plate is slidingly connected with the underframe, one end of the connecting plate is disposed on an output end of the repeated horizontal moving mechanism, and an output end of the jacking cylinder is provided with a floating joint fixedly connected with the vacuum adsorption mechanism. A stable rising structure enables its vacuum adsorption mechanism to move up and down to assist root placement.

Further, symmetrical guide rods are disposed at both ends of the connecting plate to be fixedly connected with the vacuum adsorption mechanism, the jacking cylinder is located between the two guide rods, and the connecting plate has a synchronous belt fixing block disposed between the jacking cylinder and one of the guide rods, and the synchronous belt fixing block is fixedly connected with the output end of the repeated horizontal moving mechanism. The jacking mechanism can move on a horizontal plane.

Further, the repeated horizontal moving mechanism includes a motor and two synchronous pulleys, the motor is disposed on the underframe, one of the synchronous pulleys is disposed on an output end of the motor, the other of the synchronous pulleys is disposed on the underframe and is symmetrical with a position of the motor, a synchronous belt is disposed on the synchronous pulley, and a section of the synchronous belt is disposed on the jacking mechanism. The jacking mechanism can move repeatedly on the horizontal plane.

Further, the underframe is provided with two guide rails which are parallel to the synchronous belt, and the guide rails are provided with guide rail sliders matched with the guide rails, and the guide rail sliders are fixedly connected with the jacking mechanism. The jacking mechanism can move more smoothly and safely.

Unlike the prior art, the above technical solution has the following beneficial effects:
1. in the present invention, the jacking mechanism is pushed by the repeated horizontal moving mechanism to drive the vacuum adsorption mechanism to move directly below the cultivation hole on the cultivation plate, and then the vacuum adsorption mechanism is driven to rise upwards by the jacking mechanism, so that the output end of the vacuum adsorption mechanism touches the root hairs of the hydroponic plant through the cultivation hole to adsorb the root hairs tightly to the vacuum suction rod, and then retracts through the jacking mechanism, so that the root hairs smoothly pass through the cultivation hole without being stuck on the cultivation plate, resulting in rotting of the root hairs, and thus ensuring the stable growth of the hydroponic plants.
2. In the present invention, a plurality of rows of adsorption pores are provided on the vacuum suction rod, which effectively prevents the problem that when only one single adsorption pore is disposed, the adsorption pore is easily blocked by part of root hairs and cannot adsorb all the root hairs, so that part of the root hairs is still stuck on the cultivation plate.

### BRIEF DESCRIPTION OF THE FIGURES

Fig. 1 is a structural schematic diagram of a root placement device for hydroponic transplanting of the present invention; and
Fig. 2 is an exploded structural diagram of the root placement device for hydroponic transplanting of the present invention.

Description of reference signs:
1, underframe, 101, guide rail, 102, guide rail slider, 2, repeated horizontal moving mechanism, 201, motor, 202, synchronous pulley, 203, synchronous belt, 3, jacking mechanism, 301, jacking cylinder, 302, connecting plate, 303, guide rod, 304, floating joint, 4, vacuum adsorption mechanism, 401, mounting seat, 402, vacuum suction device, 403, direction adjustment lock nut, 404, adsorption pore, 405, vacuum suction rod, 5, cultivation plate.

### DETAILED DESCRIPTION OF THE INVENTION

In order to explain in detail, the technical content, structural features, realized purpose and effect of the technical solution, the following details are described in combination with specific embodiments and accompanying drawings.

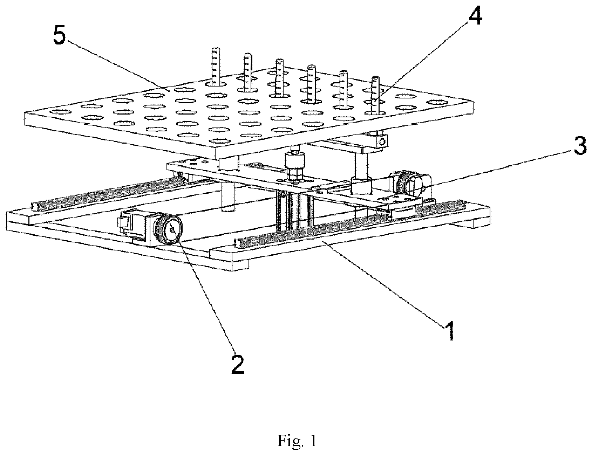

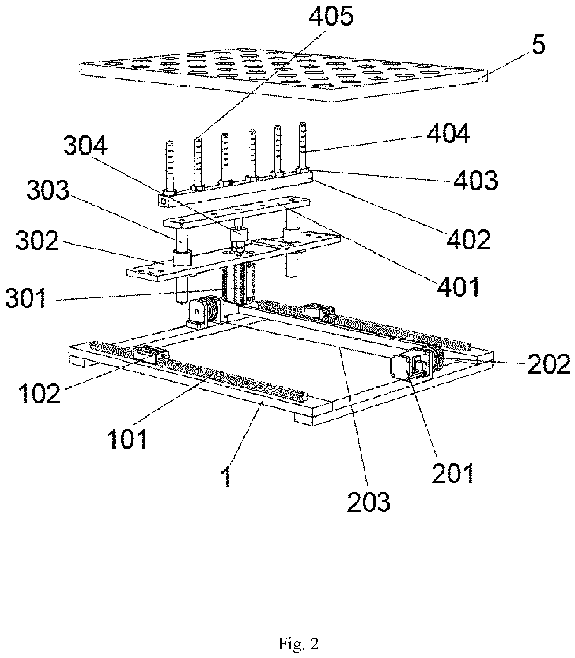

Referring to Figs. 1-2, the present embodiment provides an auxiliary root placement device for hydroponic transplanting, which includes an underframe 1 including two short support plates and two long support plates fixedly mounted on the short support plates to form a rectangular frame, and the long support plates are provided with guide rails 101, and the guide rails 101 are provided with guide rail sliders 102 matched with the guide rails. The driving mechanism includes a repeated horizontal moving mechanism 2, a jacking mechanism 3 and a vacuum adsorption mechanism 4. The repeated horizontal moving mechanism 2 is disposed on the short support plate of the underframe 1, the jacking mechanism 3 is fixedly connected with the guide rail sliders 102 of the two long support plates of the underframe 1. An output end of the repeated horizontal moving mechanism 2 is fixedly connected with the jacking mechanism 3, an output end of the jacking mechanism 3 is fixedly connected with a lower end of the vacuum adsorption mechanism 4, an output end of the vacuum adsorption mechanism 4 is disposed upward and perpendicular to the cultivation plate 5, and the jacking mechanism 3 drives the vacuum adsorption mechanism 4 to rise through the cultivation plate 5 to adsorb the root hairs of hydroponic plants.

In this embodiment, the vacuum adsorption mechanism 4 includes a plurality of vacuum suction rods 405, a vacuum suction device 402 and a mounting seat 401. A lower end of a central position of the mounting seat 401 is fixedly connected with an output end of the jacking mechanism 3 through a nut, a lower end of the vacuum suction device 402 is integrally disposed on the mounting seat 401. The vacuum suction rods 405 are arranged on the vacuum suction device 402 with an arrangement spacing consistent with a spacing of the cultivation holes on the cultivation plate 5. The vacuum suction rod 405 is cylindrical, and a plurality of rows of adsorption pores 404 are disposed on the vacuum suction rod 405. A bottom end of the vacuum suction rod 405 is provided with a direction adjustment lock nut 403, and the direction adjustment lock nut 403 is disposed on the vacuum suction device 402.

In this embodiment, the jacking mechanism 3 includes a connecting plate 302 and a jacking cylinder 301 provided on the connecting plate 302. Both ends of the connecting plate 302 are correspondingly connected with the guide rail sliders 102 on the two long support plates of the underframe 1, and both ends of the connecting plate 302 are provided with symmetrical guide rods 303 which are fixedly connected with the corresponding ends of the mounting seat 401 on the vacuum adsorption mechanism 4. The jacking cylinder 301 is located between the two guide rods 303 and disposed below the connecting plate 302. The connecting plate 302 is provided with a synchronous belt 203 fixing block between the jacking cylinder 301 and one of the guide rods 303, which is fixedly connected with the output end of the repeated horizontal moving mechanism 2. The output end of the jacking cylinder 301 is provided with a floating joint 304 which is fixedly connected with the mounting seat 401 on the vacuum adsorption mechanism 4 and can drive the vacuum adsorption mechanism 4 to move up and down.

In this embodiment, the repeated horizontal moving mechanism 2 includes a motor 201 and two synchronous pulleys 202. The motor 201 is disposed on the short support plate of the underframe 1 through an L-shaped mounting plate. One of the synchronous pulleys 202 is disposed on the output end of the motor 201, and the motor 201 drives the synchronous pulley 202 to rotate, the other synchronous pulley 202 is disposed on the short support plate of the underframe 1 through two fixing plates. A position of the synchronous pulley 202 is symmetrical with a position of the motor 201. The synchronous pulley 202 is provided with one synchronous belt 203, and as the motor 201 drives one synchronous pulley 202, the other synchronous pulley rotates. A small section of an upper end of the synchronous belt 203 penetrating the synchronous belt 203 fixing block on connecting plate 302 is provided inside, and when the synchronous belt 203 operates, the connecting plate 302 will be driven to move.

In the concrete operation, by placing the cultivation plate 5 on the device, the output end of the motor 201 on the repeated horizontal moving mechanism 2 drives the synchronous pulley 202 to rotate, so that the synchronous belt 203 is driven on a horizontal plane, thereby pulling the mounting seat 401 to drive the whole jacking mechanism 3 together with the vacuum adsorption mechanism 4 to move under the cultivation hole of the cultivation plate 5, then the mounting seat 401 is pushed through the output end of the jacking cylinder 301 on the jacking mechanism 3 to drive the vacuum suction device 402 to move upwards, so that the vacuum suction rod 405 is protruded from the cultivation hole on the cultivation plate 5 and touches the root hairs of the hydroponic plants, then the vacuum suction device 402 is activated so that its vacuum suction rod 405 generates suction, to make the root hairs all attached to the adsorption pores 404 of the vacuum suction rod 405, and then the vacuum suction rods are retracted through the jacking cylinder 301 on the jacking mechanism 3, so that the vacuum suction rod 405 moves downward through the cultivation hole on the cultivation plate 5 with the root hairs, and the vacuum suction device 402 stops operation so that the vacuum suction rod 405 loosens the root hairs, so that all the root hairs of the hydroponic plants can enter the cultivation hole, thus ensuring the stable growth of the hydroponic plants.

It should be noted that relational terms such as first and second are used herein only to distinguish one entity or operation from another and do not necessarily require or imply any such actual relationship or order between these entities or operations. Moreover, the terms "comprise", "include" or any other variation thereof are intended to encompass non-exclusive inclusion, so that a process, method, article or terminal equipment that includes a set of elements includes not only those elements but also other elements that are not explicitly listed, or also elements inherent to such a process, method, article or terminal equipment. In the absence of further limitations, the elements defined by the sentences "comprising ..." or "including ..." do not exclude the existence of other elements in the process, method, article or terminal equipment including the elements. In addition, in this paper, "greater than", "less than", "more than", etc. are understood to exclude this number; "above", "below" and "within" are understood to include this number.

While the above various embodiments are already described, once those skilled in the art understand basic creative concepts, they can make additional modifications and alterations for these embodiments. The above description is only the embodiments of the present invention and does not limit the patent scope of the present invention, any equivalent structure or equivalent process modification used according to the contents of the description and accompanying drawings in the present invention, no matter whether it is directly or indirectly used in any other related technical field, should be included within the protection scope of the present invention.

## Claims

1. An auxiliary root placement device for hydroponic transplanting, wherein the auxiliary root placement device comprises a vacuum adsorption mechanism and jacking mechanism, wherein the vacuum adsorption mechanism is driven by the jacking mechanism to move up and down along a cultivation plate, and the vacuum adsorption mechanism gathers plant root systems attached above the cultivation plate and fills the plant root systems in a cultivation hole.

2. An auxiliary root placement device for hydroponic transplanting, wherein the auxiliary root placement device comprises a vacuum adsorption mechanism, an underframe, a repeated horizontal moving mechanism, and a jacking mechanism, wherein the repeated horizontal moving mechanism is disposed on the underframe, the jacking mechanism is slidingly connected with the underframe, an output end of the repeated horizontal moving mechanism is fixedly connected with the jacking mechanism, an output end of the jacking mechanism is fixedly connected with the vacuum adsorption mechanism, and an output end of the vacuum adsorption mechanism is disposed upward.

3. The auxiliary root placement device for hydroponic transplanting according to claim 1 or 2, wherein the vacuum adsorption mechanism comprises a plurality of vacuum suction rods, a vacuum suction device and a mounting seat, wherein the vacuum suction rods are disposed on the vacuum suction device, the vacuum suction device is disposed on the mounting seat, and the mounting seat is fixedly connected with the output end of the jacking mechanism.

4. The auxiliary root placement device for hydroponic transplanting according to claim 1 or 3, wherein the vacuum suction rod is cylindrical, the vacuum suction rod is provided with a plurality of rows of adsorption pores, the vacuum suction rod is provided with a direction adjustment lock nut, and the direction adjustment lock nut is disposed on the vacuum suction device.

5. The auxiliary root placement device for hydroponic transplanting according to claim 1 or 2, wherein the jacking mechanism comprises a connecting plate and a jacking cylinder disposed on the connecting plate, wherein the connecting plate is slidingly connected with the underframe, one end of the connecting plate is disposed on an output end of the repeated horizontal moving mechanism, and an output end of the jacking cylinder is provided with a floating joint fixedly connected with the vacuum adsorption mechanism.

6. The auxiliary root placement device for hydroponic transplanting according to claim 1 or 5, wherein both ends of the connecting plate are provided with symmetrical guide rods to be fixedly connected with the vacuum adsorption mechanism, the jacking cylinder is located between the two guide rods, and the connecting plate has a synchronous belt fixing block disposed between the jacking cylinder and one of the guide rods, and the synchronous belt fixing block is fixedly connected with the output end of the repeated horizontal moving mechanism.

7. The auxiliary root placement device for hydroponic transplanting according to claim 1 or 2, wherein the repeated horizontal moving mechanism comprises a motor and two synchronous pulleys, the motor is disposed on the underframe, one of the synchronous pulleys is disposed on an output end of the motor, the other of the synchronous pulleys is disposed on the underframe and is symmetrical with a position of the motor, a synchronous belt is disposed on the synchronous pulley, and a section of the synchronous belt is disposed on the jacking mechanism.

8. The auxiliary root placement device for hydroponic transplanting according to claim 1 or 7, wherein the underframe is provided with two guide rails which are parallel to the synchronous belt, and the guide rails are provided with guide rail sliders matched with the guide rails, and the guide rail sliders are fixedly connected with the jacking mechanism.
